# EUROPEAN PATENT SPECIFICATION

(11) **EP 3 463 174 B1**
(45) Date of publication and mention of the grant of the patent: **27.05.2020**
(21) Application number: 17729200.0
(22) Date of filing: 25.05.2017
(51) Int. Cl.: A61C 8/00, A61C 13/275

(54) **ANCHORING ASSEMBLY FOR A DENTAL PROSTHESIS**
VERANKERUNGSANORDNUNG FÜR EINE ZAHNPROTHESE
ENSEMBLE ANCRAGE POUR PROTHÈSE DENTAIRE

(30) Priority: 27.05.2016 IT UB20163874
(43) Date of publication of application: 10.04.2019
(73) Proprietor: Errecieffe S.r.l., 24036 Ponte San Pietro (BG) (IT)
(72) Inventor: AGLIATI, Ignazio, 24030 Ambivere BG (IT)
(74) Representative: Barbaro, Gaetano
(86) International application number: PCT/IB2017/053086
(87) International publication number: WO 2017/203463

(56) References cited:
- EP-A1- 2 481 371
- EP-A1- 2 489 328
- WO-A1-2010/031188

## Description

The present invention generally relates to supporting structures for dental prostheses and in particular to a support assembly comprising a plurality of implants that may be fitted in the upper and/or lower jawbone of a patient, as well as a plurality of connecting rods arranged between the implants.

It is well known that replacing missing teeth with dental implants prevents bone resorption. In fact, dental implants perform the same function as the natural roots of the teeth, thus allowing to maintain the shape and anatomy of the jawbone as well as to prevent natural migration of the teeth and gingival retraction.

It is known that dental implants are assembled surgically and generally comprise a prosthesis or crown that replaces a natural tooth and is fixed on an implant by way of a suitable connecting member called "abutment".

Also known are anchoring assemblies wherein a complex dental prosthesis, e.g. having the shape of a whole dental arch, is mounted on a plurality of implants that are surgically fitted in the jawbone and protrude from the gum. The prosthesis may be fixed on the implants directly or by way of a suitable superstructure mounted on the implants, which serve as supporting members or "pillars".

The use of anchoring assemblies is extremely useful in elderly patients whose bone structure is weakened due to bone resorption or osteoporosis and cannot therefore be fully exploited to insert individual implants that replace the roots of natural teeth.

Known anchoring assemblies for dental prostheses comprise a plurality of implants and a superstructure made up of a plurality of connecting arms configured to be fixed between subsequent implants, more particularly at the ends of the abutments that protrude from the gum. The connecting arms have a telescopic structure that can be adjusted to the actual distance between subsequent implants once they have been surgically fitted into the jawbone. Moreover, the ends of the arms and the ends of the individual implants are configured so as to form spherical couplings that allow the arms to be oriented depending on the inclination the implants reach *in vivo* once they have been fitted into the jawbone. In fact, it is not generally possible to obtain a perfectly vertical arrangement of the implants due to the condition of the bone structure of the upper or lower jawbone, and because the implants are fitted surgically in spaces that are generally small and poorly accessible. In addition to this, the manual ability of a dentist greatly affects the result of an intervention.

Anchoring assemblies of this type for dental prostheses are described e.g. in patents US 5219286 and EP 1357853.

Also known are assemblies having a structure similar to the anchoring assemblies, but that are used to take dental records in view of the manufacturing of a final dental prosthesis once a number of implants have been surgically fitted in the jawbone.

In this case, the telescopic arms of the superstructure are not mounted on the abutments of the implants, but on special pins that form an extension of the implants and serve to keep them in place when the dental record is made. It is known in fact that this operation requires to use a plastic material that is pressed against the implants and made to cure *in situ.* The resulting dental record serves as a model for the manufacturing of a monolithic superstructure on which a dental prosthesis will be permanently mounted. The monolithic superstructure is usually made starting from a metal block that is processed by numerical control machines.

Unlike the anchoring assemblies described in patents US 5219286 and EP 1357853, a superstructure comprising telescopic arms and respective pins is therefore only a provisional element used to manufacture a final monolithic superstructure. An example of a superstructure of this type is described in patent US 6905336.

The document EP2481371, upon the disclosure of which the preamble of claim 1 is drafted, discloses a bar articulated in three plans for use in dental implants.

The document EP2489328 discloses a modular framework comprising a modular series of stumps and of rods with horizontal axis, each composed of a tubular bar that engages with a corresponding clip having a head with a through hole. The stumps 3 are configured to be inserted into respective through holes of the heads of the clips to anchor the tubular bars to the stumps.

The document WO 2010/031188 discloses a dental implant bar for mounting on a set of prearranged implant heads by an anchoring mechanism.

Despite the availability of various types of anchoring assemblies for dental prostheses, there is still a need to improve their configuration so as to facilitate assembly of a superstructure on a number of implants to be surgically fitted in the jawbone, which is an object of the present invention. Said object is achieved by an anchoring assembly whose main features are specified in the first claim, while other features are specified in the remaining claims.

An idea of solution underlying the present invention is to provide an anchoring assembly whose superstructure includes telescopic arms mounted on pins that are in turn fixed on the abutments of the implants. According to the invention, the telescopic arms are mounted on the pins by way of perforated blocks fitted therein. The pins include an outer thread and through holes of the blocks have a corresponding internal thread.

Thanks to this combination of features, by rotating the pins around their axes with relative to the abutments it is possible to raise or lower the arms relative to the abutments and thus to adjust their position and inclination until a desired arrangement is reached, for example, until they are substantially parallel to the gum. By locking the configuration of the superstructure so achieved by way of suitable glues, the superstructure can be removed from the implants and integrated in a dental prosthesis.

The main advantage of the invention is to simplify the mounting of an anchoring assembly and to ease adjusting of its components, these operations being typically performed inside a patient's mouth, where there is little room and access for the hands of a dentist.

Another important advantage of the invention is that after locking the configuration the superstructure of the anchoring assembly, the superstructure can be directly integrated in a dental prosthesis, there being no need to machine a final superstructure from a block of material. This results in a remarkable reduction of the costs for the manufacturing of a dental prosthesis.

According to an embodiment of the invention, each abutment is formed integrally with the respective dental implant, which provides the advantage of reducing the number of components a dentist has to handle and install in the mouth of a patient.

Depending on the position of the implant in the upper or lower jawbone, the axis of the abutment may be aligned or inclined relative to the axis of the implant, thus allowing to exploit the patient's bone structure in an optimal way so as to ensure the stability of the dental prosthesis immediately after surgery and over time.

Further advantages and features of the anchoring assembly according to the present invention will become clear to those skilled in the art from the following detailed and non-limiting description of embodiments thereof with reference to the attached drawings, wherein:

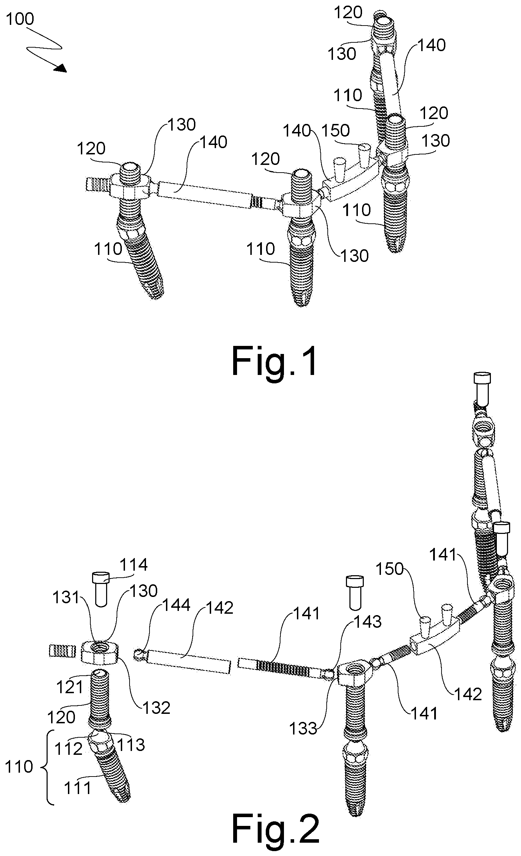

- figure 1 is a perspective view showing an assembly according to the invention for the anchoring of a dental prosthesis;
- figure 2 is a perspective exploded view of the anchoring assembly of figure 1;

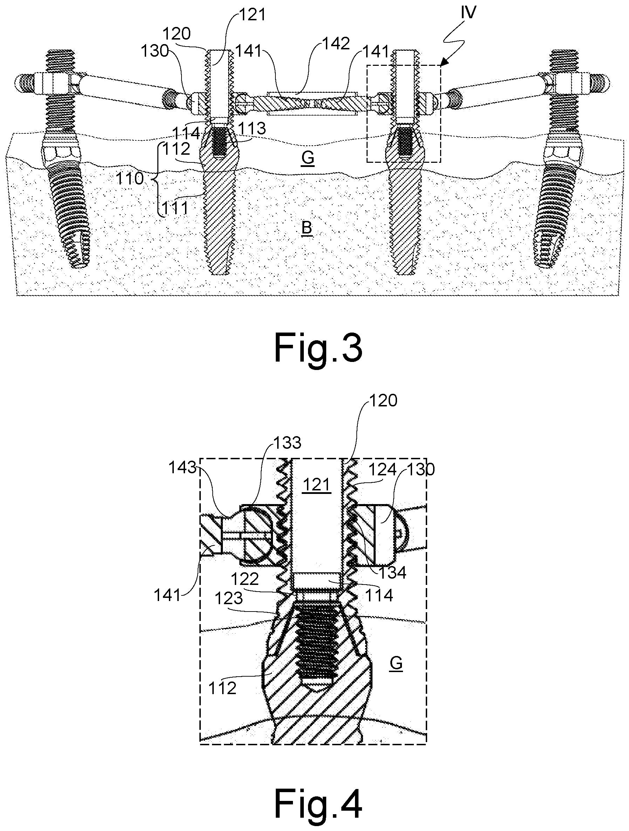

- figure 3 is a front view showing a partial longitudinal section of the anchoring assembly of figure 1 wherein the implants are fitted in a jawbone;
- figure 4 shows a detail IV of figure 3.

Referring to the figures, an anchoring assembly according to the invention for the anchoring of a dental prosthesis is generally indicated by reference numeral 100.

The anchoring assembly 100 includes a plurality of dental implants 110, for example four in the embodiment shown in the drawings.

Each dental implant 110 comprises a threaded portion 111 intended to be fitted in a hole formed in the upper or lower jawbone B of a patient, and an abutment 112 intended to protrude from the jawbone B as well as from the gum G upon surgical fitting of the dental implant 110 into the jawbone B.

The dental implant 100 also comprises a superstructure that is assembled on the implants 110 and serves to support a dental prosthesis (not shown).

The superstructure comprises a plurality of pins 120 every one of which is configured to be mounted on an abutment 112. For this purpose, each abutment 112 has a threaded hole 113 configured to receive a screw 114 and each pin 120 comprises a cavity 121 through which the screw 114 can be fitted. In order to allow assembly of the parts to be mounted, the cavity 121 has a shoulder 122 suitable to receive a head of the screw 114.

As shown in the drawings, each abutment 112 has a free end featuring a frustoconical shape. Correspondingly each pin 120 comprises an end portion 123 having a matching frustoconical shape, which facilitates assembly of the pin 120 on the abutment 112.

In the embodiment shown in the drawings, wherein the assembly 100 comprises four dental implants 110, the axes of the abutments 112 that are arranged in the middle and are intended to be fitted in the front portion of the upper or lower jawbone are substantially aligned with the axes of the respective implants 110. The axes of the abutments 112 that are arranged aside and are intended to be fitted into the rear portion of the upper or lower jawbone are instead inclined relative to the axes of the respective implants 110, for example by 17° or 30°. It is well known that the choice of the angle between the axes of the abutments and the axes of their respective implants depends on the position they have in the upper or lower jawbone and allows to exploit the jawbone structure of a patient in the most effective way so as to ensure stability of a dental prosthesis immediately after surgery, i.e. the so-called primary stability, and over time, i.e. the so-called secondary stability.

According to a preferred embodiment of the invention, each abutment 112 is formed integrally with the respective dental implant 110, which offers the advantage of reducing the number of components a dentist has to handle and install in the small room available in the oral cavity of a patient.

The superstructure of the anchoring assembly 100 also comprises a plurality of blocks 130 each having a through hole 131 allowing them to be mounted on a respective pin 120.

The superstructure of the anchoring assembly 100 finally comprises a plurality of telescopic arms 140 configured to be mounted between the blocks 130 in turn mounted on the respective pins 120. The telescopic arms 140 include at least one male element 141 and at least one hollow female element 142 whose cavity matches the shape of the male element 141.

In order to allow mounting of the arms 140 on the blocks 130, the blocks comprise matching coupling means configured to define a spherical coupling.

The use of a spherical coupling allows the arms 140 to be oriented according to the inclination the implants 110 take *in vivo* as a result of their insertion into the bone. As explained in the introduction, it is generally not possible to obtain a perfectly vertical arrangement of the implants, due to the condition of the upper or lower jawbone structure, and considering the fact that implants are fitted surgically in a small and poorly accessible room. In addition to this the manual ability of a dentist greatly affects the result of an intervention. It is therefore advantageous to configure the connection of the arms 140 so that they can be inclined so as to be adapted to the real position of the implant 110.

In the embodiment shown in the drawings the coupling means include, for example, spherical cavities formed in one between the blocks 130 and the respective arms 140 and corresponding spherical elements formed in the other one between the blocks 130 and their respective arms 140.

In the embodiment shown in the drawings, cavities 132, 133 are shown in each block 130 on substantially opposed sides relative to the through hole 131, and ball elements 143, 144 having matching diameters are respectively formed at the opposite ends of the arms 140.

In the embodiment shown in the drawings, the coupling means are configured to be snap-fitted to each other and for this purpose the ball elements 143, 144 include diametric slots that allow to reduce their size thereby allowing them to be snap-fitted into the spherical cavities 132, 133 formed in blocks 130.

It will be appreciated that this feature does not limit the invention. However, the provision of snap-fits is preferred because it simplifies assembly and provides a tactile and sound feedback once the parts are assembled.

According to the invention, the pins 120 comprise an outer thread 124 and the through holes 131 of the blocks 130 have a corresponding internal thread 134, which allows to accurately adjust the position of the blocks 130 along the pins 120 and, consequently, to accurately adjust the position of the arms 140 relative to the implants 110.

In other words, according to the actual arrangement the implants 110 reach when they have been inserted surgically into the upper or lower jawbone of a patient, it is possible to finely tune the position of the blocks 130 and of the arms 140 that form the superstructure together with the pins 120 so as to define the best possible configuration of the superstructure either in view of the design of a new dental prosthesis or in the aim of reworking an existing prosthesis.

From an operational point of view, once the implants 110 are inserted surgically into the upper or lower jawbone, the pins 120 are provisionally locked on the abutments 112 by the screws 114 and the blocks 130 are screwed on the pins 120. The dentist then assembles the arms 140 on the blocks 130 by employing the coupling means, for example the snap-fit means described above, thus completing the superstructure of the anchoring assembly 100.

Once all the components of the anchoring assembly 100 have been mounted, the dentist loosens the screws 114 and rotates the pins 120 about their respective axes relative to the abutments 112. Thanks to the threaded coupling between the pins 120 and the blocks 130 the rotation of the pins 120 causes the arms 140 to be raised or lowered with respect to the abutments 112 and, thanks to the spherical coupling means, it is also possible to adjust the inclination of the arms 140 relative to the blocks 130 and to the pins 120 so as to arrange them substantially parallel to the gum G. During these adjustment steps, the telescopic arms 140 are extended or shortened depending on the relative distance between pins 120 set by the dentist.

Once the desired configuration of the superstructure has been achieved, the dentist tightens the screws 114 in the respective threaded holes 113 of the abutments 112 and then locks the blocks 130 on the pins 120, as well as the male and female elements 141, 142 of the arms 140, by way of a suitable glue.

For this purpose, the male and female elements 141, 142 of the arms 140 may advantageously comprise textured surfaces, such as e.g. grooved, knurled and the like, whose function is to increase the gripping surface and promote adhesion of the glue. In the embodiment shown in the drawings, the male elements 141 of the arms 140 are provided e.g. with a plurality of grooves forming a helical pattern.

Once the mutual positions of the components of the superstructure are blocked, the superstructure is disassembled from the implants and delivered to a dental technician so as to be integrated in a dental prosthesis.

According to a further aspect of the invention, the arms 140 may have the shape of an arch suitable to match the contour of a dental prosthesis according to the natural curvature of the upper and/or lower jawbone of a patient. The provision of arch-shaped arms also allows to better adapt the arms to different distances between subsequent implants, while minimizing the risk that they interfere with the internal space of the dental arch, which would be negatively perceived by the patient and would result in aesthetic problems.

Moreover, the anchoring assembly 100 may advantageously comprise one or more auxiliary elements 150 for anchoring respective dental prostheses. The function of the auxiliary elements 150 is to increase the gripping surface for the mounting of the dental prostheses.

The auxiliary anchoring elements 150, that are for example rod-shaped bodies in the embodiment shown in the drawings, are configured to be mounted on the female elements 142 of the telescopic arms 140, for example by way of a snap-fitting, a threaded connection or equivalent coupling means.

The invention has herein been disclosed with reference to preferred embodiments thereof. It will be appreciated that further embodiments based on the same inventive idea may exist, all of which are encompassed in the scope of protection of the claims set forth below.

## Claims

1. An anchoring assembly (100) for the anchoring of a dental prosthesis, said anchoring assembly (100) comprising:
i) a plurality of dental implants (110), each dental implant (110) comprising a threaded portion (111) and an abutment (112) comprising a threaded hole (113);
ii) a plurality of pins (120) every one of which is configured to be mounted on one of said abutments (112) and comprises a through axial cavity (121);
iii) a plurality of blocks (130), each block (130) comprising a through hole (131) configured to receive a respective pin (120);
iv) a plurality of telescopic arms (140),
wherein said telescopic arms (140) and said blocks (130) comprise coupling means (132, 133, 143, 144) having a complementary shape and configured to define a spherical coupling,
wherein said pins (120) comprise an external thread (124),
**characterized in that** said through holes (131) of the blocks (130) have an internal thread (134) corresponding to said external thread (124), wherein the free end of each abutment (112) has a frustoconical shape and each pin (120) comprises a matching end portion (123) having a frustoconical shape.

2. An anchoring assembly (100) according to claim 1, wherein each abutment (112) is formed integrally with the respective dental implant (110).

3. An anchoring assembly (100) according to any one of claims 1 to 2, wherein said coupling means comprise a spherical cavity (132, 133) formed in each block (130) on opposite sides thereof with respect to the axis of its through hole (131), and ball elements (143, 144) the diameter of which corresponds to the diameter of the spherical cavities formed in each block, the ball elements being formed at opposite ends of the telescopic arms (140).

4. An anchoring assembly (100) according to claim 3, wherein said ball elements (143, 144) comprise diametrical slots, whereby their assembly into said spherical cavities (132, 133) occurs by snap fit.

5. An anchoring assembly (100) according to any one of claims 1 to 4, wherein the telescopic arms (140) comprise male elements (141) that are coupled or configured to be coupled with female elements (142) and wherein said male elements and/or female elements (141, 142) comprise textured surfaces.

6. An anchoring assembly (100) according to any one of claims 1 to 5, wherein the telescopic arms (140) have an arcuate shape.

7. An anchoring assembly (100) according to any one of claims 1 to 6, further comprising one or more auxiliary anchoring elements (150) in the form of rod-shaped bodies, said auxiliary anchoring elements (150) being configured to be mounted on the telescopic arms (140).

## Patentansprüche

1. Eine Verankerungsbaugruppe (100) zur Verankerung einer Zahnprothese, wobei die Verankerungsbaugruppe (100) umfasst:
i) eine Mehrzahl von Dentalimplantaten (110), wobei jedes Zahnimplantat (110) einen mit einem Gewinde versehenen Bereich (111) umfasst sowie einen Anker (112) mit einem Gewindeloch (113);
ii) eine Mehrzahl von Stiften (120), von denen jeder dazu ausgelegt ist, an einem der besagten Anker (112) montiert zu werden, und einen durchgehenden, axialen Hohlraum (121) aufweist;
iii) eine Mehrzahl von Blöcken (130), wobei jeder Block (130) ein Durchgangsloch (131) aufweist, welches für die Aufnahme eines zugeordneten Stiftes (120) ausgelegt ist;
iv) eine Mehrzahl von Teleskoparmen (140),
wobei die besagten Teleskoparme (140) und die besagten Blöcke (130) Koppelmittel (132, 133, 143, 144) aufweisen, welche eine komplementäre Gestalt haben und dazu ausgelegt sind, eine Kugelverbindung zu definieren,
wobei die besagten Stifte (120) ein Außengewinde (124) aufweisen, **dadurch gekennzeichnet, dass** die besagten Durchgangslöcher (131) der Blöcke (130) ein mit dem Außengewinde (124) korrespondierendes Innengewinde (134) aufweisen, wobei das freie Ende jedes Ankers (112) eine kegelstumpfförmige Gestalt hat, und wobei jeder Stift (120) einen passenden Endbereich (123) mit einer kegelstumpfförmigen Gestalt umfasst.

2. Eine Verankerungsbaugruppe (100) gemäß Anspruch 1, wobei jeder Anker (112) mit dem betreffenden Dentalimplantat (110) integral ausgebildet ist.

3. Eine Verankerungsbaugruppe (100) gemäß einem der Ansprüche 1 oder 2, wobei die besagten Koppelmittel (132, 133, 143, 144) einen kugelförmigen Hohlraum (132, 133) umfassen, der in jedem Block (130) an bezüglich der Achse seines Durchgangslochs (131) gegenüber liegenden Seiten desselben eingeformt ist, sowie Kugelelemente (143, 144), deren Durchmesser mit dem Durchmesser der in jeden Block eingeformten kugelförmigen Hohlräume korrespondiert, wobei die Kugelelemente an gegenüber liegenden Enden der Teleskoparme (140) ausgebildet sind.

4. Eine Verankerungsbaugruppe (100) gemäß Anspruch 3, wobei die besagten Kugelelemente (143, 144) gegenüber liegende Schlitze aufweisen, so dass deren Einbau in die besagten kugelförmigen Hohlräume (132, 133) durch Einklipsen erfolgt.

5. Eine Verankerungsbaugruppe (100) gemäß einem der Ansprüche 1 bis 4, wobei die Teleskoarme (140) Steckerelemente (141) umfassen, welche an Buchsenelemente (142) gekoppelt sind oder für eine solche Kopplung ausgelegt sind, und wobei die besagten Steckerelemente und/oder die Buchsenelemente (141, 142) strukturierte Oberflächen aufweisen.

6. Eine Verankerungsbaugruppe (100) gemäß einem der Ansprüche 1 bis 5, wobei die Teleskoparme (140) eine bogenförmige Gestalt aufweisen.

7. Eine Verankerungsbaugruppe (100) gemäß einem der Ansprüche 1 bis 6, ferner umfassend ein oder mehrere Hilfsverankerungselemente (150) in der Form von stabförmigen Körpern, wobei die besagten Hilfsverankerungselemente (150) dazu ausgelegt sind, an den Teleskoparmen (140) montiert zu werden.

## Revendications

1. Ensemble d'ancrage (100) pour l'ancrage d'une prothèse dentaire, ledit ensemble d'ancrage (100) comprenant :
i) une pluralité d'implants dentaires (110), chaque implant dentaire (110) comprenant une partie filetée (111) et une butée (112) comprenant un trou fileté (113) ;
ii) une pluralité de tenons (120) dont chacun est configuré pour être monté sur l'une desdites butées (112) et comprend une cavité axiale débouchante (121) ;
iii) une pluralité de blocs (130), chaque bloc (130) comprenant un trou débouchant (131) configuré pour recevoir un tenon (120) respectif ;
iv) une pluralité de bras télescopiques (140),
dans lequel lesdits bras télescopiques (140) et les blocs (130) comprennent des moyens de couplage (132, 133, 143, 144) ayant une forme complémentaire et configurés pour définir un couplage sphérique,
dans lequel lesdits tenons (120) comprennent un filetage externe (124),
**caractérisé en ce que** lesdits trous débouchants (131) des blocs (130) ont un filetage interne (134) correspondant audit filetage externe (124), dans lequel l'extrémité libre de chaque butée (112) a une forme tronconique et chaque tenon (120) comprend une partie d'extrémité correspondante (123) ayant une forme tronconique.

2. Ensemble d'ancrage (100) selon la revendication 1, dans lequel chaque butée (112) est formée de manière solidaire avec l'implant dentaire (110) respectif.

3. Ensemble d'ancrage (100) selon l'une quelconque des revendications 1 à 2, dans lequel lesdits moyens de couplage comprennent une cavité sphérique (132, 133) formée dans chaque bloc (130) sur ses côtés opposés par rapport à l'axe de son trou débouchant (131), et les éléments sphériques (143, 144) dont le diamètre correspond au diamètre des cavités sphériques formées dans chaque bloc, les éléments sphériques étant formés au niveau des extrémités opposées des bras télescopiques (140) .

4. Ensemble d'ancrage (100) selon la revendication 3, dans lequel lesdits éléments sphériques (143, 144) comprennent des fentes diamétrales, moyennant quoi leur assemblage dans lesdites cavités sphériques (132, 133) a lieu par encliquetage.

5. Ensemble d'ancrage (100) selon l'une quelconque des revendications 1 à 4, dans lequel les bras télescopiques (140) comprennent des éléments mâles (141) qui sont couplés ou configurés pour être couplés avec des éléments femelles (142) et dans lequel lesdits éléments mâles et/ou les éléments femelles (141, 142) comprennent des surfaces texturées.

6. Ensemble d'ancrage (100) selon l'une quelconque des revendications 1 à 5, dans lequel les bras télescopiques (140) ont une forme arquée.

7. Ensemble d'ancrage (100) selon l'une quelconque des revendications 1 à 6, comprenant en outre un ou plusieurs éléments d'ancrage auxiliaires (150) se présentant sous la forme de corps en forme de tige, lesdits éléments d'ancrage auxiliaires (150) étant configurés pour être montés sur les bras télescopiques (140).
